**Europäisches Patentamt**

**European Patent Office**

**Office européen des brevets**

(19)

(11) Veröffentlichungsnummer: **0 131 747**

**B1**

(12) # EUROPÄISCHE PATENTSCHRIFT

(45) Veröffentlichungstag der Patentschrift:
**02.09.87**

(21) Anmeldenummer: **84106634.3**

(22) Anmeldetag: **09.06.84**

(51) Int. Cl.⁴: **F 16 B 13/00**

(54) Platten-Befestigungsvorrichtung mit Dübel.

(30) Priorität: **22.06.83 DE 3322397**

(43) Veröffentlichungstag der Anmeldung:
**23.01.85 Patentblatt 85/4**

(45) Bekanntmachung des Hinweises auf die Patenterteilung:
**02.09.87 Patentblatt 87/36**

(84) Benannte Vertragsstaaten:
**AT BE CH DE FR IT LI LU NL**

(56) Entgegenhaltungen:
**EP-A-0 076 945**
**DE-A-2 712 670**
**DE-A-2 803 709**
**DE-A-2 849 140**
**DE-A-2 908 535**
**DE-A-2 939 117**
**DE-U-7 125 106**
**GB-A-1 239 197**

(73) Patentinhaber: **BWM Dübel + Montagetechnik GmbH, Länderwiesenstrasse 3, D-7022 Leinfelden-Echterdingen (DE)**

(72) Erfinder: **Reinwarth, Klaus, Höhenstrasse 10, D-7244 Waldachtal 4 (DE)**
Erfinder: **Schäfer, Harald, Zehntstrasse 19, D-6803 Ladenburg (DE)**
Erfinder: **Appelshäuser, Theo, Wormser Landstrasse 96, D-6520 Worms (DE)**

(74) Vertreter: **Schmid, Berthold, Patentanwälte Dipl.-Ing. B. Schmid Dr. Ing. G. Birn Dipl.- Phys. H. Quarder Falbenhennenstrasse 17, D-7000 Stuttgart 1 (DE)**

## Beschreibung

Die Erfindung bezieht sich auf eine Vorrichtung zur Befestigung einer Platte od. dgl. an einer Wand oder dem Dach eines Gebäudes, mit einem eine Durchtrittsbohrung der Platte oder dgl. durchsetzenden, in eine Befestigungsbohrung der Wand oder des Daches eingreifenden Dübel und einer Verankerungshülse zum unmittelbaren Einsetzen in die Durchtrittsbohrung der Platte od. dgl.. Eine derartige Vorrichtung ist durch die EP-A-76 945 bekanntgeworden.

Sie dient zur variablen Abstandsbefestigung dünnwandiger Fassadenplatten bzw. Fassadenträger. Eine Anpassung der Befestigungsanordnung an dünnwandigen Fassadenplatten bzw. Fassadenträgern erreicht man durch Verwendung verschiedener Stützelemente, welche für die verschiedenen Wanddicken bzw. Profilnormen der Fassadenplatten bzw. Fassadenträger ausgelegt sind. Diese Vorrichtung ist nur dort geeignet, wo die Dicke der Fassadenplatte bzw. die Abmessungen des Fassadenträgers im Befestigungsbereich exakt eingehalten werden.

Es kommt aber nicht selten vor, daß die Dicke der Platte entweder nicht von vorneherein festgelegt ist, oder von Platte zu Platte erhebliche Dickenunterschiede auftreten. Außerdem gibt es relativ dicke Platten, beispielsweise bei einem Verblendmauerwerk, die eine Verankerungshülse erheblicher Länge notwendig machen würden und für welche die vorbekannte Vorrichtung nicht vorgesehen ist.

Bei der vorbekannten Vorrichtung erreicht man die sichere zug- und druckfeste Verbindung der Platte od. dgl. mit der Wand oder dem Dach durch die rastende Verbindung der Verankerungshülse mit der Platte einerseits und die verschiebefeste Verbindung des Dübels mit der Verankerungshülse andererseits. Wenn aber die Plattendicke erheblichen Schwankungen unterworfen ist, so ist entweder die zug- und druckfeste Verbindung mit der Verankerungshülse nicht gewährleistet -bei zu dünnen Platten- oder aber läßt sich die Verankerungshülse an der zu dicken Platte nicht befestigen.

Die Aufgabe der Erfindung besteht infolgedessen darin, eine Vorrichtung der eingangs beschriebenen Art so weiterzubilden, daß trotz schwankender Plattendicke eine sichere zug- und druckfeste Verankerung der Platte od. dgl. mit der Wand oder dem Dach gewährleistet ist.

Zur Lösung dieser Aufgabe wird erfindungsgemäß vorgeschlagen, daß die Vorrichtung gemäß dem Oberbegriff des Anspruchs 1 entsprechend dem kennzeichnenden Teil dieses Anspruchs ausgebildet ist. Durch den oder vorzugsweise durch die Durchbrüche in der Wandung der Verankerungshülse kann man Klebstoff, Klebemörtel od. dgl. hindurchdrücken, der dann die Fuge oder den Spaltraum zwischen der Plattenbohrung und der Verankerungshülsen-Außenwandung ausfüllt und soweit möglich auch noch in das Plattenmaterial etwas eindringt. Damit ist dann die Verankerungshülse zug- und druckfest in der Platte gehalten. Damit sich die Verankerungshülse nicht mit Klebstoff od. dgl. füllt, verwendet man eine Presse mit einem zapfenförmigen Einsteckende, welches das gesamte Innere der Verankerungshülse ausfüllt. Dieses Einsteckende besitzt zweckmäßigerweise genau so viele Austrittsöffnungen wie die Verankerungshülse Durchbrüche aufweist. Damit dann jeweils auch ein Durchbruch mit einer Austrittsöffnung der Presse fluchtet, ist sowohl in Längs- als auch in Umfangsrichtung ein genaues Ausrichten der Presse bzw. des Presseneinsteckendes gegenüber der Verankerungshülse notwendig. In Einschieberichtung erreicht man dies beispielsweise durch dichtes Anlegen der Presse am äußeren Ende der Verankerungshülse. In Umfangs- bzw. Drehrichtung gesehen erfolgt die "Justierung" der Presse gegenüber der Verankerungshülse über die Richteinrichtung der Verankerungshülse. Diese läßt das Einsteckende der Presse nur in einer genau vorgegebenen Drehstellung relativ zur Verankerungshülse einschieben. Dies erfordert natürlich ein Gegenstück zur Richteinrichtung an der Presse bzw. am Pressen-Einsteckende. Wenn bzw. sobald der Dübel mit der Verankerungshülse verbunden ist, kann man die Befestigungsschraube eindrehen und damit die Verbindung des Dübel-Einsteckendes mit der Wand oder dem Dach herstellen. Man ist nunmehr von der Plattendicke unabhängig.

Gemäß einer ersten Variante dieser Lösung der Aufgabe ist die Verankerungshülse durch den im Gebrauch äußeren Teil des Dübel gebildet. Das heißt, der Dübel ist hier aufgrund der einstückigen Fertigung von vornherein zug- und druckfest mit der Verankerungshülse verbunden. Zweckmäßigerweise besteht diese Einheit aus Kunststoff. Weil die Befestigungsschraube nicht nur die Verankerungshülse, sondern auch den gesamten Dübel in Längsrichtung vollständig durchsetzen muß, ist die Wandung, welche das innere Ende der Verankerungshülse während des Klebstoff-Einpressens verschließt, durchstoßbar ausgebildet. Im Falle der bevorzugten Kunststofffertigung ist das Durchstoßen kein Problem, wenn man die Wandstärke entsprechend gering, insbesondere geringer als die Dübelwandstärke, wählt. Das Kunststoffmaterial, welches üblicherweise bei der Dübelherstellung verwendet wird, läßt ein Durchstoßen der Wandung durch das innere Schraubenende problemlos zu.

Eine andere Variante der Erfindung kennzeichnet sich dadurch, daß der Dübel die Verankerungshülse in Längsrichtung durchsetzt, wobei ein Dübelbund oder eine in den Dübel eingedrehte Befestigungsschraube mit dem vorzugsweise über die Sichtfläche der Platte od. dgl. überstehenden äußeren Kopfende der Verankerungshülse zug- und druckfest verbunden ist. Auch in diesem Falle muß die innenliegende Wandung der Verankerungshülse, welche zugleich deren inneres Ende bildet, nach dem Verkleben der Verankerungshülse in der Plattenbohrung durchstoßen werden. Auch hierzu kann man die Befestigungsschraube oder ein anderes geeignetes, stanzstempelartiges Werkzeug verwenden. Nachfolgend wird der Dübel in die Verankerungshülse eingeschoben und in das Befestigungsloch der Wand od. dgl. eingesteckt. Die zug- und druckfeste Verbindung zwischen der Verankerungshülse und dem Dübel kann man entweder unmittelbar vornehmen oder aber indirekt dadurch daß der Schraubenkopf das außenliegenden Dübelende überragt und er mit der Verankerungshülse zug - und druckfest verbunden wird.

In Weiterbildung der Erfindung wird vorgeschlagen, daß der Dübelbund oder der Schraubenkopf rastend oder schnappend mit dem äußeren Kopfende der aus Kunststoff gefertigten Verankerungshülse verbunden ist, wobei dieses Kopfende den Dübelbund bzw. Schraubenkopf aufnimmt und sein äußeres Ende mit einem nach innen ragenden Bund hintergreift. Im ersteren Falle wird der Dübel so tief in die Verankerungshülse eingeschoben, bis sein üblicherweise trichterartiger Dübelbund mit der entsprechenden Aufnahme am äußeren Ende der Verankerungshülse verrastet ist. Dies setzt entsprechend federelastisches Material voraus, wobei in erster Linie eine während des Verrastens stattfindende Aufweitung des äußeren Hülsenendes vorgesehen ist.

Dementsprechend läuft die Verankerung des Schraubenkopfes mit der Aufnahme der Verankerungshülse ab, wobei nach dem Verrasten der Dübelbund bzw. das äußere Dübelende zwischen dem Schraubenkopf und der Aufnahme der Verankerungshülse eingeklemmt bzw. verschiebefest gehalten ist.

Eine weitere Ausgestaltung der Erfindung sieht vor, daß das äußere Kopfende der Verankerungshülse elastisch aufweitbar ist und es wenigstens einen, vorzugsweise aber mehrere, beispielsweise vier, gleichmäßig am Umfang verteilte Längsschlitze aufweist. Die Länge dieser Längsschlitze kann verhältnismäßig klein gewählt werden. Es reicht, wenn sie sich über die Aufnahme für den Dübel bzw. Schraubenkopf erstrecken.

Eine andere Ausgestaltung der Erfindung besteht darin, daß das äußere Kopfende der Verankerungshülse einen rückwärtigen, umlaufenden Absatz aufweist, der von einem Innenbund einer Abdeckkappe hintergriffen ist. Diese Abdeckkappe verhindert das Aufspreizen des äußeren Kopfendes und sie sichert dadurch die verrastende Verbindung zwischen der Verankerungshülse und dem Dübelbund bzw. Schraubenkopf. Andererseits schafft diese Abdeckkappe auch einen sauberen Abschluß nach außen hin.

Gemäß einer bevorzugten Ausführungsform der Erfindung wird vorgeschlagen, daß die Verankerungshülse mehrere, vorzugsweise drei, am Umfang verteilt angeordnete Längsleisten aufweist und sich jeweils zwischen zwei benachbarten Längsleisten mindestens ein Durchbruch befindet. Dadurch werden Kammern geschaffen, die in Umfangsrichtung durch zwei benachbarte Längsleisten, die Außenwandung der Verankerungshülse und die Bohrung, in der Platte od. dgl. begrenzt sind. In axialer Richtung wird innen eine Begrenzung durch eine absatzartige Verengung des Bohrlochs in der Platte od. dgl. und außen durch das Kopfende der Verankerungshülse geschaffen. In diese Kammern wird der Klebstoff od. dgl. durch die Durchbrüche der Verankerungshülse eingespritzt und man erreicht auf diese Weise eine dickere Schicht aus Klebstoff, Klebemörtel od. dgl. als bei der außen glatten Verankerungshülse, die in eine im wesentlich ihrem Außendurchmesser entsprechende Plattenbohrung gesteckt wird. Vorteilhafterweise sind jeder dieser Kammern mehrere, insbesondere in Längsreihe angeordnete Bohrungen zugeordnet.

Eine zweckmäßige Weiterbildung der Erfindung besteht darin, daß die Richteinrichtung als innere Längsnut der Verankerungshülse zur Aufnahme einer Außenleiste od. dgl. am Einsteckende der Presse ausgebildet ist. Das Einsteckende wird der Bohrung der Verankerungshülse so zugeordnet, daß seine Außenleiste, eine radial abstehende Warze od. dgl., in die Längsnut der Verankerungshülse eingeführt werden kann. Es reicht eine Zentrierung in Umfangsrichtung während der letzten Phase der Einschubbewegung der Presse.

Die Erfindung wird nachstehend anhand der Zeichnung näher erläutert. Die Zeichnung zeigt Ausführungsbeispiele der Erfindung. Hierbei stellen dar:

Fig. 1 Die in eine Wand eingesetzte und eine Platte festhaltende Vorrichtung in der Draufsicht,

Fig. 2 in vergrößertem Maßstab eine zweite Ausführungsform der Vorrichtung mit angedeuteter Wand und Platte,

Fig. 3 vergrößert einen Schnitt gemäß der Linie III-III der Fig. 2,

Fig. 4 in abermals vergrößerter Darstellung einen abgebrochenen Halbschnitt durch eine dritte Variante der Erfindung.

Die Vorrichtungen dienen zur Befestigung einer Platte 1 od. dgl., beispielsweise einer Fassadenplatte an einer Wand 2 oder dem Dach eines nicht näher dargestellten Gebäudes. Dabei befindet sich zur Bildung einer Hinterlüftung die Platte vorzugsweise in einem Abstand 3 von der Wand. Im Falle einer Wandverkleidung wirkt auf die Platte bzw. die gesamte Fassade eine vom Wind herrührende Druckkraft 4 oder eine in Gegenrichtung wirkende Sogkraft. Aus diesem Grunde ist sowohl an der Wand 2 als auch an der Platte 1 eine zug- und druckfeste Verbindung in Pfeilrichtung 4 bzw. in Gegenrichtung mit der Vorrichtung erforderlich. Außerdem wirkt bei der Wandverkleidung auch noch eine Gewichtskraft im Sinne des Pfeils 5 auf die Vorrichtung ein.

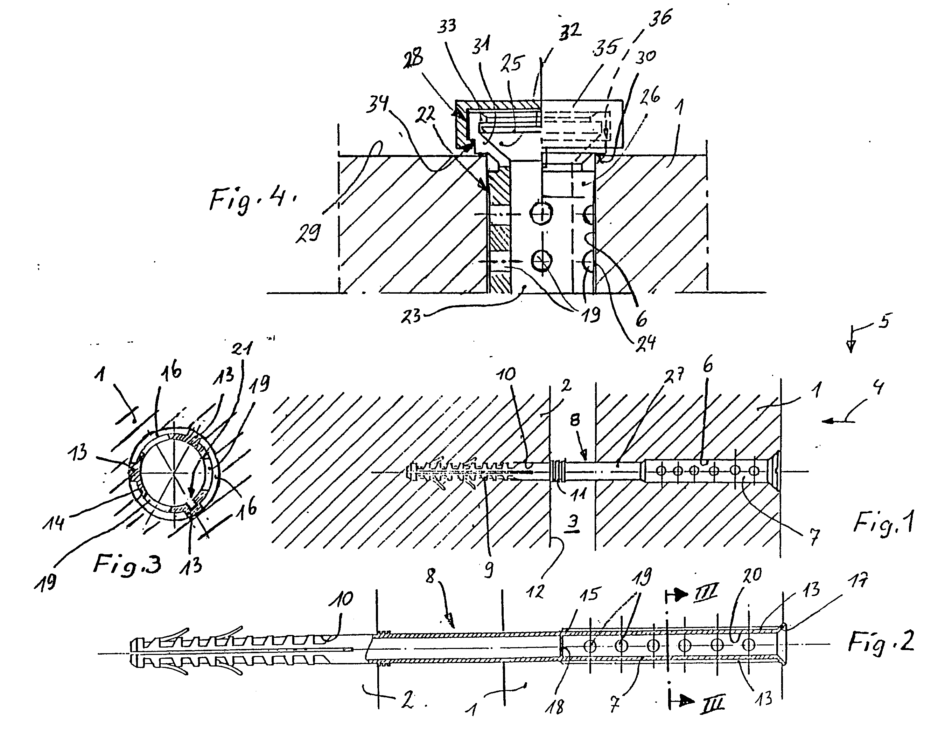

Weil die Dicke der Platte nicht von vornherein feststeht, wird die Vorrichtung in nachstehend noch näher beschriebener Weise mit der Platte über eine Klebeschicht oder eine Schicht aus anderem klebenden Material verbunden. Bei der Ausführungsform nach Fig. 1 wird für jede Vorrichtung an der Platte 1 eine sich absatzartig verengende Bohrung 6 angebracht, die an ihrem äußeren (rechten) Ende angefast ist. Der dickere Bohrungsteil nimmt eine Verankerungshülse 7 der Vorrichtung auf, welche bei diesem Ausführungsbeispiel durch den im Gebrauch äußeren, also der Platte 1, zugeordneten Teil eines Dübels 8 gebildet ist. Das Verankerungsende 9 dieses aus Kunststoff hergestellten Dübels ist in bekannter Weise ausgebildet. Der Übersichtlichkeit wegen wurde die Aufnahmebohrung 10 für dieses Verankerungsende des Dübels 8 nur angedeutet. Um ein zu tiefes Einstecken in diese Aufnahmebohrung 10 der Wand 2 zu vermeiden, können noch ein oder zwei Außenbunde 11 am Dübel vorgesehen werden, von denen sich bei einwandfreier Aufnahmebohrung nur der in Fig. 1 linke an der Außenfläche 12 der Wand 2 abstützt.

Fig. 2 zeigt eine Ausführungform des Dübels 8, die von derjenigen der Fig. 1 nur unwesentlich abweicht. Der Unterschied liegt im Vorhandensein von drei Längsleisten 13 der Verankerungshülse 7. Infolgedessen muß die Bohrung 14 in der Platte um die doppelte radiale Dicke der Längsleisten 13 größer gebohrt werden als bei der "glatten" Ausführungsform nach Fig. 1. Eine absatzartige Verengung gegen die Wand 2 hin ist aber auch bei dieser Variante zweckmäßig. Auf diese Weise ist das innere Ende der drei durch diese Leisten in Umfangsrichtung begrenzten Kammern 16 genau festgelegt bzw. jede Kammer am inneren Ende verschlossen. Am äußeren Ende wird jede Kammer durch den Dübelbund 17 verschlossen.

Gemäß Fig. 2 ist die Verankerungshülse 7 am oder im Bereich ihres inneren Endes mittels einer Wandung 18 verschlossen, die relativ dünnwandig ausgebildet und somit leicht durchstoßbar ist. Sie ist mit einer Membrane vergleichbar. Der Grund liegt darin, daß in diese Verankerungshülse ein zapfenförmiges Ende einer Presse für Klebstoff od. dgl. eingeschoben wird, das sich entweder an dieser Wandung 18 oder aber am Dübelbund 17 abstützt. Mit Hilfe dieser Presse wird Klebstoff od. dgl. durch die in Längsreihen angeordneten Durchbrüche 19 hindurchgespritzt. Dieser Klebstoff tritt im Falle der Ausführungsform nach Fig. 2 in die Kammern 16 ein. Das Einschiebende der Presse liegt dabei mit relativ engem Kontakt an der Innenwandung 20 der Verankerungshülse 7 an. Außerdem hat das Einsteckende in gleicher Weise angeordnete und dimensionierte Austrittsöffnungen wie die Durchbrüche 19 der Verankerungshülse 7. Um nun ein genaues Fluchten dieser Austrittsbohrungen der Presse sowie der Durchbrüche der Verankerungshülse 7 zu gewährleisten, ist einerseits die Einstecktiefe der Presse in der geschilderten Weise begrenzt und andererseits in Drehrichtung eine Justierung vorgesehen. Diese erreicht man in vorteilhafter Weise mittels einer Richteinrichtung, die durch mindestens eine innere Längsnut der Verankerungshülse gebildet ist. In diese bzw. jede Längsnut greift ein Gleitstein, eine Leiste od. dgl. am Einsteckende der Presse ein, der bzw. die den Pressenbohrungen in gleicher Weise zugeordnet ist wie die Längsnut bzw. Richteinrichtung 21 der Verankerungshülse 7. Die Längsnut kann sich über die gesamte Länge der Verankerungshülse erstrecken.

Es ist demnach ohne weiteres möglich, genügend Klebstoff od. dgl. in die Kammern 16 zu spritzen, ohne eine nennenswerte Klebstoffablagerung im Inneren der Verankerungshülse 7 zu bekommen. In das Verankerungsteil des Dübels kann wegen der Wandung 18 ohnehin nichts eindringen. Dasselbe gilt natürlich auch für die Aufnahmebohrung 10 der Wand 2 oder des Daches.

Wenn nun die Verankerungshülse 7 mit Hilfe des Klebstoffs od. dgl. fest mit der Platte 1 verbunden ist und damit Zug- und Druckkräfte übertragen kann, durchstößt man mit der in den Dübel eingeschobenen Befestigungsschraube, oder auch einem anderen zuvor benutzten, geeigneten Werkzeug, die Wandung 18. Hernach erfolgt in bekannter Weise ein Aufspreizen des Verankerungsendes 9 des Dübel 8 in der Bohrung 10 der Wand 2.

Beim Ausführungsbeispiel nach Fig. 1 sind ausgeprägte Kammern nicht vorhanden. Andererseits ist aber die Bohrung 6 aufgrund der gewählten Toleranzen immer etwas größer als der Außendurchmesser der Verankerungshülse 7, so daß ringsum ein Spaltraum entsteht, in welchen der Klebstoff od. dgl. eingespritzt werden kann. Der Unterschied besteht also in der durchgehenden, dafür aber wesentlich dünneren Klebeschicht. Welche der beiden Ausführungsformen jeweils zur Anwendung kommt, hängt vom Material der Platte, deren Größe und Gewicht und auch dem verwendeten Klebstoff od. dgl. ab.

Eine weitere Variante der Erfindung besteht darin, daß die Verankerungshülse 22 kein Teilstück eines Dübels ist, sondern einen separaten, insbesondere konventionell gestalteten, Dübel 23 aufnimmt. Die Verankerungshülse 22 wird in der vorbeschriebenen Weise in einer Bohrung 6 der Platte 1 mittels einer Klebeschicht gehalten, wobei der Klebstoff od. dgl., wie beschrieben, durch die Durchbrüche 19 in den Spaltraum 24 oder dementsprechende Kammern eingespritzt wird. Selbstverständlich ist auch diese Verankerungshülse 22 im Bereich ihres inneren Endes mittels einer Wandung 18 verschlossen. Sie wird mittels eines geeigneten Werkzeugs nach dem Einkleben durchstoßen, so daß man nachfolgend den Dübel 23 einschieben kann. Gegebenenfalls kann dies auch unter Verwendung der nachfolgend in den Dübel einzusteckenden Befestigungsschraube 25 geschehen. Um ein axiales Austreten des Leims od. dgl. zu verhindern, kann man die Verankerungshülse 22 in ihrem äußeren Bereich 26 konisch etwas verdicken.

Während die Befestigungsbohrung 6 für das Befestigungselement 7 bei der Ausführung nach Fig. 1 den gleichen Durchmesser aufweisen kann wie die Aufnahmebohrung 10 für das Verankerungsende 9, ist die Bohrung 6 des Ausführungsbeispiels der Fig. 4 wesentlich größer als diejenige für das Befestigungsende des Dübels 23. Die Befestigungsbohrung 10 für das nicht gezeichnete Dübelende der Variante nach Fig. 4 in der Wand 2 od. dgl. hat etwa den gleichen Außendurchmesser wie der Dübel bzw. einen Durchmesser, welcher dem Innendurchmesser der Verankerungshülse 22 entspricht.

Außerdem ist auch bei der in Fig. 4 gezeigten Variante die Bohrung 6 in der Platte 1 absatzartig ausgebildet, wie dies Fig. 1 zeigt. Der Durchmesser des engeren Bohrungsteils 27 der Fig. 1 entspricht vorzugsweise dem Durchmesser der Aufnahmebohrung 10 in der Wand 2 oder dem Dach.

Um dem Dübel 23 in der separat gefertigen Verankerungshülse 22 einen zug- und schubfesten Halt zu geben, besitzt die Verankerungshülse 22 ein in besonderer Weise gestaltetes Kopfende 28. Dieses Kopfende befindet sich vorzugsweise vor der Sichtfläche 29, jedoch könnte man es auch versenkt in der Platte unterbringen, wenn man die Bohrung 6 an ihrem äußeren Ende absatzartig um etwa die Höhe zumindest des Kopfendes 28 aufbohren würde.

Beim Ausführungsbeispiel stützt sich jedoch dieses Kopfende 28 mit seiner Schulter 30 an der Sichtfläche 29 der Platte 1 ab. Durch die Anbringung mehrerer, beispielsweise von vier, jeweils um 90° versetzt angeordneten Längsschlitzen 31 im Bereich des Kopfendes 28, wird dieses Kopfende gewissermaßen in mehrere, beispielsweise vier, zungenartige, elastisch auslenkbare Teilstücke unterteilt. Das Kopfende 28 besitzt einen nach innen ragenden Bund 33 mit einer äußeren Auflaufschräge für den Dübelbund 32. Wenn der Dübelbund gegen diesen Innenbund 33 der Verankerungshülse 22 gedrückt wird, so weichen die Teilstücke des Kopfendes 28 federelastisch nach außen aus, wodurch eine rastende oder schnappende Verbindung zwischen dem Dübel und der Verankerungshülse 22 hergestellt wird. Gegebenenfalls kann, wie beim Ausführungsbeispiel, zusätzlich bzw. alternativ auch eine Verrastung mit dem Kopf der Befestigungsschraube 25 erreicht werden. In jedem Falle erzielt man auf diese Weise eine zug- und druckfeste Verbindung im Sinne des Pfeils 4 bzw. in Gegenrichtung zwischen dem Dübel 23 und der Verankerungshülse 22.

Um diese Rastverbindung zu sichern und auch nach außen hin einen sauberen Abschluß der gesamten Vorrichtung zu erzielen, ist das Kopfende 28 der Verankerungshülse 22 mit einem rückwärtigen Absatz 34 versehen, den eine aufschnappbare und damit elastisch auch etwas aufweitbare Abdeckkappe 35 mit ihrem Innenbund 36 hintergreift.

## Patentansprüche

1. Vorrichtung zur Befestigung einer Platte (1) od. dgl. an einer Wand (2) oder dem Dach eines Gebäudes mit einem eine Durchtrittsbohrung (6) der Platte od. dgl. durchsetzenden, in eine Befestigungsbohrung (10) der Wand oder des Daches eingreifenden Dübel (8) und einer Verankerungshülse (7) zum unmittelbaren Einsetzen in die Durchtrittsbohrung der Platte od. dgl., dadurch gekennzeichnet, daß die Wandung der Verankerungshülse (7, 22) wenigstens einen, vorzugsweise aber mehrere Durchbrüche (19) aufweist und sie mit einer Richteinrichtung (21) für eine in die Verankerungshülse einsteckbare Presse für Klebstoff od. dgl. versehen ist, wobei das der Wand (2) zugeordnete innere Ende der Verankerungshülse (7, 22) mittels einer durchstoßbaren Wandung (18) verschlossen und der Dübel (8, 23) mit der Verankerungshülse zug- und druckfest verbunden oder verbindbar ist.

2. Vorrichtung nach Anspruch 1, dadurch gekennzeichnet, daß die Verankerungshülse (7) durch den im Gebrauch äußeren Teil des Dübels (8) gebildet ist.

3. Vorrichtung nach Anspruch 1, dadurch gekennzeichnet, daß der Dübel (23) die Verankerungshülse (22) in Längsrichtung durchsetzt, wobei ein Dübelbund (32) oder eine in den Dübel (23) eingedrehte Befestigungsschraube (25) mit dem vorzugsweise über die Sichtfläche (29) der Platte (1) od. dgl. überstehenden äußeren Kopfende (28) der Verankerungshülse (22) zug- und druckfest verbunden ist.

4. Vorrichtung nach Anspruch 3, dadurch gekennzeichnet, daß der Dübelbund (32) oder der Schraubenkopf (25) rastend oder schnappend mit dem äußeren Kopfende (28) der aus Kunststoff gefertigten Verankerungshülse (22) verbunden ist, wobei dieses Kopfende den Dübelbund (32) bzw. Schraubenkopf (25) aufnimmt und sein äußeres Ende mit einem nach innen ragenden Bund (33) hintergreift.

5. Vorrichtung nach Anspruch 4, dadurch gekennzeichnet, daß das äußere Kopfende (28) der Verankerungshülse (22) elastisch aufweitbar ist und es wenigstens einen Längsschlitz (31) aufweist.

6. Vorrichtung nach Anspruch 5, dadurch gekennzeichnet, daß das äußere Kopfende (28) der Verankerungshülse (22) einen rückwärtigen, umlaufenden Absatz (34) aufweist, der von einem Innenbund (36) einer Abdeckkappe (35) hintergriffen ist.

7. Vorrichtung nach wenigstens einem der vorhergehenden Ansprüche, dadurch gekennzeichnet, daß die Verankerungshülse (22) mehrere, vorzugsweise drei, am Umfang verteilt angeordnete Längsleisten (13) aufweist und sich jeweils zwischen zwei benachbarten Längsleisten mindestens ein Durchbruch (19) befindet.

8. Vorrichtung nach wenigstens einem der vorhergehenden Ansprüche, dadurch gekennzeichnet, daß die Richteinrichtung (21) als innere Längsnut der Verankerungshülse (7, 22) zur Aufnahme einer Außenleiste od. dgl. am Einsteckende der Presse ausgebildet ist.

## Claims

1. Device for attaching a panel (1) or the like to a wall (2) or the roof of a building and having, traversing a through bore (6) in the panel or the like and engaging a fixing bore (10) in the wall or on the roof, a plug (8) and an anchoring sleeve (7) for direct insertion into the through bore in the panel or the like, characterized in that the walls of the anchoring sleeve (7, 22) comprise at least one but preferably a plurality of apertures (19) and in that they are provided with an aligning device (21) for a press adapted to be inserted into the anchoring sleeve and carrying adhesive or the like, the inner end of the anchoring sleeve (7, 22) which is associated with the wall (2) being occluded by a wall (18) which can be pierced, the plug (8, 23) being connected or connectable to the anchoring sleeve in traction and compression resistant manner.

2. Device according to Claim 1, characterized in that the anchoring sleeve (7) is constituted by that part of the plug (8) which is on the outside when it is in use.

3. Device according to Claim 1, characterized in that the plug (23) traverses the anchoring sleeve (22) in a longitudinal direction, a shoulder (32) of the plug or a fixing screw (25) turned in the plug (23) is tension and compression-resistantly connected to that outer head end (28) of the anchoring sleeve (22) which preferably projects beyond the visible face (29) of the panel (1) or the like.

4. Device according to Claim 3, characterized in that the shoulder (32) on the plug or the screw head (25) is push-lockingly or snapwise connected to the outer head end (28) of the synthetic plastics anchoring sleeve (22), the said head end accommodating the plug shoulder (32) or screw head (25), its outer end having an inwardly projecting shoulder (33) which engages behind said shoulder (32) or screw head (25).

5. Device according to Claim 4, characterized in that the outer head end (28) of the anchoring sleeve (22) can be widened open elastically and has at least one longitudinal slot (31).

6. Device according to Claim 5, characterized in that the outer head end (28) of the anchoring sleeve (22) comprises a rearwards encircling step (34) behind which engages an inner shoulder (36) on a covering cap (35).

7. Device according to at least one of the preceding Claims, characterized in that the anchoring sleeve (22) comprises a plurality of and preferably two longitudinal strips (13) distributed over the periphery and in that between any two adjacent longitudinal strips there is at least one passage (19).

8. Device according to at least one of the preceding Claims, characterized in that the aligning device (21) is constructed as an inner longitudinal groove in the anchoring sleeve (7, 22) to accommodate an external strip or the like on the insertion end of the press.

## Revendications

1. Dispositif pour la fixation d'une plaque (1) ou d'un élément analogue à une paroi (2) ou au toit d'un bâtiment, avec, traversant une forure (6) de la plaque ou de l'élément analogue, une cheville (8) pénétrant dans une forure de fixation (10) de la paroi ou du toit, et une douille d'ancrage (7) pour être engagée directement dans la forure de la plaque ou de l'élément analogue, caractérisé en ce que la paroi de la douille d'ancrage (7, 22) présente au moins un, mais de préférence plusieurs passages (19) et est pourvue d'un dispositif d'alignement (21) pour une presse pour matière adhésive ou analogue, pouvant être engagée dans la douille d'ancrage, l'extrémité intérieure, associée à la paroi (2), de la douille d'ancrage (7, 22) étant fermée par une paroi susceptible d'être traversée et la cheville (8, 22) étant liée ou pouvant être liée à la douille d'ancrage en résistant à la traction et à la compression.

2. Dispositif suivant la revendication 1, caractérisé en ce que la douille d'ancrage (7) est formée par la partie extérieure, à l'emploi, de la cheville (8).

3. Dispositif suivant la revendication 1, caractérisé en ce que la cheville (23) traverse en direction longitudinale la cheville d'ancrage (22), un collet de cheville (32) ou une vis de fixation (25) vissée dans la cheville (23) avec son extrémité de tête (28) extérieure dépassant de préférence la surface exposée (29) de la plaque (1) ou élément analogue, reliée à la douille d'ancrage (22) en résistant à la traction et à la compression.

4. Dispositif suivant la revendication 3, caractérisé en ce que le collet de cheville (32) ou la tête de la vis est liée à déclic ou en s'accrochant à l'extrémité de tête (28) extérieure de la douille d'ancrage (22) faite de matière synthétique, cette extrémité de tête recevant le collet de cheville (32) ou la tête (25) de la vis et son extrémité extérieure s'accrochant par un collet (33) s'avançant vers l'intérieur.

5. Dispositif suivant la revendication 4, caractérisé en ce que l'extrémité de tête (28) extérieure de la douille d'ancrage (22) peut être élargie élastiquement et présente au moins une fente longitudinale (31).

6. Dispositif suivant la revendication 5, caractérisé en ce que l'extrémité de tête (28) extérieure de la douille d'ancrage (22) présente une saillie périphérique (34) dirigée vers l'arrière, à laquelle s'accroche un collet intérieur (36) d'une coiffe de couverture (35).

7. Dispositif suivant au moins une des revendications précédentes, caractérisé en ce que la douille d'ancrage (22) présente plusieurs - de préférence trois - réglettes longitudinales distribuées à son pourtour et en ce que chaque fois, entre deux réglettes longitudinales voisines est situé au moins un passage (19).

8. Dispositif suivant au moins une des revendications précédentes, caractérisé en ce que le dispositif d'alignement (21) est conformé en rainure longitudinale de la douille d'ancrage (22) pour recevoir une réglette extérieure ou un élément analogue, situé à l'extrémité de la presse par où elle s'enfonce.

Fig. 4.

Fig. 3

Fig. 1

Fig. 2

0 131 747